# EUROPEAN PATENT SPECIFICATION

(11) **EP 3 705 614 B1**
(45) Date of publication and mention of the grant of the patent: **28.02.2024**
(21) Application number: 20161585.3
(22) Date of filing: 06.03.2020
(51) Int. Cl.: A43B 1/02, A43B 5/04, B32B 5/02, D04H 1/56, B32B 5/26, D04H 3/16, D04H 5/06, D06M 17/10, D06N 3/00, D06N 3/14, D06N 3/18, A43B 23/02

(54) **FIBER-CONTAINING STRUCTURE AND METHOD FOR MANUFACTURING THE SAME**
FASERHALTIGE STRUKTUR UND HERSTELLUNGSVERFAHREN
STRUCTURE CONTENANT DES FIBRES ET SON PROCÉDÉ DE FABRICATION

(30) Priority: 08.03.2019 TW 108107865
(43) Date of publication of application: 09.09.2020
(73) Proprietor: San Fang Chemical Industry Co., Ltd., Kaohsiung City (TW)
(72) Inventor: LIN, Chih-Yi, Kaohsiung City (TW); FENG, Chung-Chih, Kaohsiung City (TW); YANG, Kao-Lung, Kaohsiung City (TW); CHU, Ko-Fu, Kaohsiung City (TW)
(74) Representative: 2K Patentanwälte Blasberg Kewitz & Reichel

(56) References cited:
- EP-A1- 3 608 453
- WO-A1-01/12889
- WO-A1-01/12896
- WO-A1-2015/100369
- WO-A2-2013/151987
- DE-A1- 19 642 253
- JP-A- H0 978 420
- KR-B1- 101 605 120
- US-A1- 2016 053 434
- DATABASE WPI Week 201133 2011 Thomson Scientific, London, GB; AN 2011-D87058 XP002799556, -& TW 201 036 567 A (POU CHEN CORP) 16 October 2010 (2010-10-16)

## Description

### BACKGROUND

### 1. Field of the Disclosure

The present disclosure relates to a fiber-containing structure, and more particularly, to a fabric-containing structure for shoe manufacture, a method for manufacturing the same and uses thereof.

### 2. Description of the Related Art

Artificial leather is important in livelihood industry, and it is widely used in areas such as furniture and footwear, especially upper leather.

For example, a conventional upper leather of footwear usually contains an inner rib and artificial leather or mesh cloth as a surface layer. The surface layer is further attached to polyurethane with hot melt glue for exhibiting colorful variations, and then a shoe is obtained thereby. However, this manufacturing process mentioned above is complicated. Moreover, when using artificial leather as the surface layer, the shoe achieves good water resistance, but poor breathability; on the other hand, when using mesh cloth as the surface layer, the shoe achieves good breathability, but poor waterproof.

In order to improve the conventional complicate process, artisans applied thermoplastic resin such as thermoplastic polyurethane onto a shoe mold through a melt blowing process to directly obtain a shoe cover. Alternatively, the product manufactured thereby can be further assembled into a shoe. The process of melt blowing thermoplastic resin has the advantages of fast production, no waste material production, being environmentally friendly in materials and process. However, on the other hand, due to using melt blowing to form a thermoplastic resin web, a stacked web structure is obtained. Furthermore, because the thermoplastic resin is elastic, the physical properties and dimensional stability are not good, such as low tensile strength, high elongation, interlayer peeling occurrence. Therefore, this process cannot be directly used in the manufacture of shoe.

In order to overcome the disadvantages R.O.C. (Taiwan) Patent Publication No. 200742671 discloses a fiber structure product, which includes a base layer and a first dense layer. The first dense layer is arranged on one side of the base layer. The first dense layer is transformed from a part of the base layer, and the average density of the first dense layer is greater than the average density of the base layer. Fibers of the base layer and the first dense layer contain a core structure and a sheath structure covering the core structure, and the core and sheath structures are made of different materials. In order to improve the structural strength of the fiber structure product, the dense layer is provided by being transformed from the base layer. However, the improvement of the dense layer is limited. The base layer made by melt blowing or spun bonding is still non-woven. There is no entangles between fibers to improve the strength, because entangles occur in a traditional needle rolling non-woven process. A stacking fiber mesh structure cannot solve the problems of poor physical properties and dimensional stability of stacked web structure.
US 2016/053434 A1 discloses an environmental-friendly composite filament artificial leather includes a composite filament textile and an elastomer film. The composite filament textile is made of composite filament. The composite filament includes at least one core portion and a sheath portion. The at least one core portion is a polyester-type polymer, a polyamide polymer or a polypropylene polymer. The sheath portion sheathes the at least one core portion, and the sheath portion is a thermoplastic elastomer. The elastomer film is bonded with the composite filament textile. The elastomer film is made of one selected from the following materials: thermoplastic polyurethane (TPU), thermoplastic polyester elastomer (TPEE) and thermoplastic polyolefin (TPO). By this way, an environment-friendly artificial leather of lightweight, good abrasion, good touch feeling and well dimentional stability can be manufactured. Furthermore, the artificial leather can be manufactured without use of any solvent, so as to conform to the environment protection requirement.
DATABASE WPI Week 201133 2011 Thomson Scientific. London. GB; AN 2011-D87058 discloses a shoe upper with a melt-spray fabric layer, the shoe upper comprises a base layer and a melt-spray fabric layer that is bonded to the base layer. By such arrangements, the shoe is not easily deformed and looks more beautiful only by performing a single processing operation of the shoe upper, thus saving both time and labours.
In JPH0978420A to obtain a stretchable knit fabric having excellent surface feeling and elongation recovery by laminating a knit fabric of a thermoplastic synthetic fiber and an elastomeric nonwoven fabric and hot-bonding the fabrics keeping the form of the knit fabric, a nonwoven fabric or a knit or woven fabric of a polyurethane elastomer is laminated to a circular knitted fabric gray sheet made of a thermoplastic synthetic fiber such as nylon and the laminate is pressed with a hot embossing roller to obtain a stretchable knit fabric having soft feeling and containing the elastomer melted at the joint part of the fabrics and impregnated into the knit nylon fabric to >=1/4 and <=3/4 of the thickness of the cross-section of the nylon fabric. The produced stretchable knit fabric has a soft feeling and contains the knit nylon fabric in non-melted state to keep the original form.
DE19642253A1 discloses a basic material for the clothing and shoe industries is permeable to water vapour, but resists the passage of water and comprises a layer of a flat knitted textile material (3) and a layer of a thermoplastic melt blown fleece (2) based on microfibres with a weight of 10-100 g/<2>m, preferably 20-70 g/m<2>. The layers (2,3) are laminated to each other using heat and pressure which plasticises the fleece (2) fibres and compresses them to form a film-like layer (4) with a smooth surface. The size of the pores remaining in the film (2a) allows permeation by water vapour, but prevents passage of water. In a process for manufacturing the basic material the textile material (3) and the melt blown fleece (2) are fed together into a gap between two continuous conveyer belts which apply a pressure of 5-30 kN/cm<2> at 90-180 deg C for at least 10 seconds. The layers (3,4a) form a laminate (4) as the fleece (2) fibres melt and are compressed to form a porous film (2a).

Thus, a novel fiber-containing structure is needed to overcome the disadvantages of poor physical properties and dimensional stability of the conventional fiber structure product.

### SUMMARY

The present disclosure provides a woven base material according to the claims. By welding the woven base material and an elastomer, the physical properties and dimensional stability of a fiber-containing structure are greatly improved, and the shortcomings of conventional products are avoided. The fiber-containing structure is suitable for the manufacture of upper leather of a shoe.

Hence, the present disclosure provides a fiber-containing structure comprising:
a woven base material comprising base fibers, the base fibers being interwoven with each other and being welded to each other in at least one interlacing place, wherein a material of the base fibers comprises thermoplastic polyurethane (TPU); and
a welded elastomer layer comprising a welded elastomer, wherein the base fibers and at least one part of the welded elastomer are welded to each other, wherein a material of the welded elastomer layer comprises TPU; and and adhesive locating between the woven base material and the welded elastomer layer, wherein a material of the adhesive comprises TPU.

The present disclosure further provides a method for manufacturing the fiber-containing structure comprising a woven base material comprising base fibers, the base fibers being interwoven with each other and being welded to each other in at least one interlacing place; and a welded elastomer layer comprising a welded elastomer, wherein the base fibers and at least one part of the welded elastomer are welded to each other; the method comprising:
(a) providing a woven fabric, wherein the woven fabric comprises fibers, and the fibers are interwoven with each other;
(b) heating the woven fabric for welding the fibers in at least one interlacing place to obtain the woven base material; and
(c) melt blowing an elastomer on the woven base material to form the welded elastomer, and welding the fibers and at least one portion of the welded elastomer.

The present disclosure further provides a shoe structure comprising the fiber-containing structure according to claim 1.

### BRIEF DESCRIPTION OF THE DRAWINGS

FIG. 1 illustrates a sectional view of a fiber-containing structure according to an embodiment of the present disclosure.
FIG. 2 illustrates a schematic view of a fiber-containing structure according to an embodiment of the present disclosure.

### DETAILED DESCRIPTION

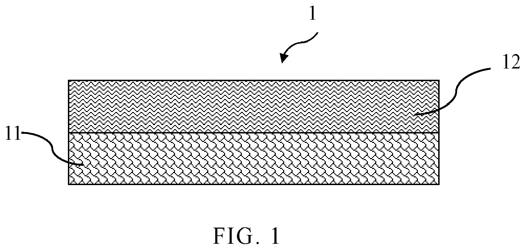

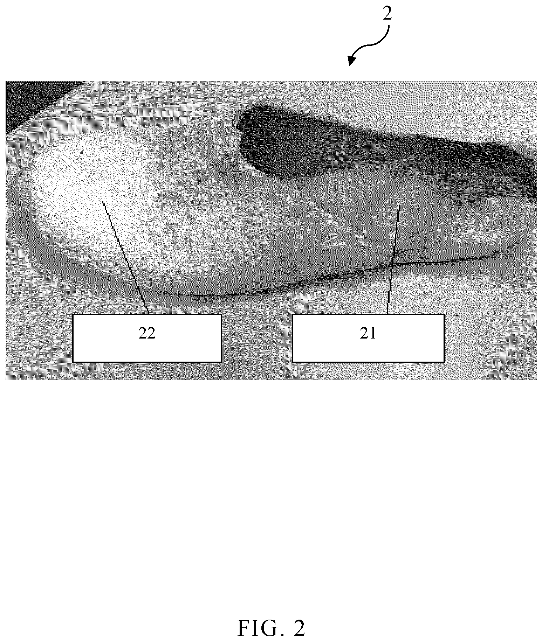

Referring to FIGs. 1 and 2, the present disclosure provides a fiber-containing structure 1, 2 comprising:
a woven base material 11, 21 comprising base fibers, the base fibers being interwoven with each other and being welded to each other in at least one interlacing place; and
a welded elastomer layer 12, 22 comprising a welded elastomer, wherein the base fibers and at least one part of the welded elastomer are welded to each other.

As used herein, the term "a woven base material" refers to a base material formed by interweaving and welding fibers. As used herein, the term "interweaving" includes but is not limited to interweaving between fibers by weaving, knitting, crocheting, or braiding. For example, using a fiber-forming meridian yarn and latitude yarn to cross-pass each other, or using a fiber-forming yarn to form loops and continuously stacking and entangling the loops together. Preferably, the interweaving is weaving or using a fiber-forming yarn to form loops and continuously stacking and entangling the loops together. Various types of machines may be applied for forming the woven base material, such as a hosiery knitter, weaving machine, circular knitting machine or flat knitting machine. The obtained woven base material may be of a sheet, roll or tubular. With the application of the woven base material, the physical properties and dimensional stability of the fiber-containing structure according to the disclosure are greatly improved.

According to the disclosure, fibers for interweaving with each other and forming the woven base material are base fibers. Preferably, a plurality of the base fibers may be gathered to form a yarn or a long fiber for easy interweaving. At least one part of the base fibers is thermoplastic polyurethane (TPU).

The base fibers according to the disclosure are welded to each other in at least one interlacing place of the woven base material. As used herein, the term "welding" refers to a process of heating a polymer to a temperature above the melting point for softening the polymer; fusing the softened polymer with another polymer which is also heated to a temperature above the melting point; and cooling and fusing these two polymers to a temperature below the melting points of the two polymers. It is believed, though not intended to be restricted by any theoretical, that because the base fibers are welded to each other in at least one interlacing place of the woven base material, the physical properties such as tensile strength, tear strength and peeling strength and dimensional stability of the woven base material according to the disclosure are greatly improved. Furthermore, artisans skilled in this field may produce the fiber-containing structure with proper physical properties and dimensional stability as well as retaining fabric soft toughness and hand feeling by adjusting the strength or density of the welding, such as adjusting the manner, temperature or duration of welding. Preferably, the base fibers are welded to each other in at least one interlacing place and are not welded to each other in at least one interlacing place of the woven base material. In another aspect, the base fibers are welded to each other in all interlacing places of the woven base material.

As used herein, the term "base fibers" refers to single-component fibers or multi-component fibers. The multi-component fibers according to the disclosure are fibers formed by different materials. Depending on the alignment, the multi-component fibers are in a shape of core/sheath, side by side or segmented pie. In one preferred embodiment of the disclosure, the base fibers comprise a first component and a second component. The base fibers in the first component are welded together in at least one interlacing place, and the base fibers in the second component are not welded. Preferably, the first component exposes to a surface of the base fibers and is a thermoplastic elastomer for achieving welding. On the other hand, according to the physical properties, a suitable material may be applied as the second component to cooperate with the first component to provide the base fibers with desired characteristics. For examples, at least one of the material of the second component is selected from the group consisting of polyamide, polyolefins, polymethyl methacrylate (PMMA), polyethylene terephthalate (PET), polyethylene terephthalate (PTT), polybutylene terephthalate (PBT), polyacrylonitrile (PAN) and mixtures thereof; preferably polyethylene terephthalate, polyethylene terephthalate, or nylon 6. In one embodiment of the present disclosure, the weight ratio of the first component and the second component is from about 10:90 to about 90:10, preferably from about 30:70 to about 70:30.

In one another preferred embodiment of the disclosure, the base fibers further comprise an elastic fiber for easily covering a mold as mentioned below, and also for exhibiting desired elasticity of the fiber-containing structure.

The welded elastomer layer according to the disclosure comprises a welded elastomer, wherein the base fibers and at least one part of the welded elastomer are welded to each other. The elastomer of the welded elastomer layer is thermoplastic polyurethane. The elastomer is welded to for the welded elastomer and further welded with the base fibers. The welded elastomer and the base fibers may be further welded in the welded and interlacing place of the base fibers or welded in the non-interlacing place of the base fibers.

In one preferred embodiment of the disclosure, the base fibers comprise a first component and a second component. The base fibers in the first component are welded together with at least one part of the welded elastomer, and the base fibers in the second component are not welded. Preferably, the first component exposes to a surface of the base fibers and is a thermoplastic elastomer for achieving welding.

In one preferred embodiment of the disclosure, the welded elastomer layer comprises a welded mesh layer comprising mesh fibers. The mesh fibers are crossing, nonwoven and welded together in at least one crossing place, and the base fibers and at least one part of the mesh fibers are welded together. In the embodiment, the elastomer forms mesh fibers, and the mesh fibers are welded to provide a mesh structure by crossing but not by weaving. Preferably, the mesh fibers of the welded mesh layer are welded together in at least one crossing place, and are not welded in at least one crossing place. In another aspect, the mesh fibers are welded to each other in all crossing places of the welded mesh layer. In still another aspect, the elastomers are welded to each other to form the welded mesh layer and further welded to the base fibers. The welded elastomer and the base fibers may be further welded in the welded and crossing place of the welded elastomer layer. In another aspect, the welded elastomer and the base fibers may be welded in a place without crossing of the welded elastomer layer.

In one embodiment of the disclosure, the thickness of the welded elastomer layer is from about 0.2 mm to about 5.0 mm; preferably from 0.3 mm to about 4.0 mm; more preferably from 0.35 mm to about 3.0 mm.

The fiber-containing structure further comprises an adhesive locating between the woven base material and the welded elastomer layer for enhancing the linkage between the woven base material and the welded elastomer layer without interfering the welding between the base fibers and the welded elastomer. The adhesive is a thermoplastic elastomer, and the adhesive, the woven base material and the welded elastomer layer are welded simultaneously. The material of the adhesive comprises thermoplastic polyurethane.

The disclosure also provides a method for manufacturing the fiber-containing structure comprising a woven base material comprising base fibers, the base fibers being interwoven with each other and being welded to each other in at least one interlacing place; and a welded elastomer layer comprising a welded elastomer, wherein the base fibers and at least one part of the welded elastomer are welded to each other; the method comprising:
(a) providing a woven fabric, wherein the woven fabric comprises fibers, and the fibers are interwoven with each other;
(b) heating the woven fabric for welding the fibers in at least one interlacing place to obtain the woven base material; and
(c) melt blowing an elastomer on the woven base material to form the welded elastomer, and welding the fibers and at least one portion of the welded elastomer.

According to the method of the disclosure, the step (a) is providing the woven fabric. The manners of providing the woven fabric include but are not limited to interweaving between fibers by weaving, knitting, crocheting, or braiding. For example, using a fiber-forming meridian yarn and latitude yarn to cross-pass each other, or using a fiber-forming yarn to form loops and continuously stacking and entangling the loops together. Various types of machines may be applied for forming the woven base material, such as a hosiery knitter, weaving machine, circular knitting machine or flat knitting machine.

According to the method of the disclosure, the step (b) is heating the woven fabric for welding the fibers in at least one interlacing place to obtain the woven base material. In one embodiment of the disclosure, the step comprises heating a polymer to a temperature above the melting point for softening the polymer; fusing the softened polymer with another polymer which is also heated to a temperature above the melting point; and cooling and fusing these two polymers to a temperature below the melting points of the two polymers. Artisans skilled in this field may adjust the strength or density of welding, such as adjust the manner, temperature or duration of welding.

In one preferred embodiment of the disclosure, the step (b) further comprises providing an inner mold, covering the inner mold with the woven fabric, and heating the woven fabric for welding the fibers in at least one interlacing place. Since the fibers are welded on the inner mold, the woven base material may have a substantially stationary shape corresponding to the inner mold shape, but still have flexibility of fibers. In one preferred embodiment of the present disclosure, the inner mold is a shoe last.

According to the method of the disclosure, the step (c) comprises melt blowing an elastomer on the woven base material to form the welded elastomer, and welding the fibers and at least one portion of the welded elastomer. The melt blowing according to the disclosure refers to ejecting the heated and softened elastomer by air pressure with adjusted amount and pattern following the desired thickness and position, and cooling the elastomer after ejecting to form the welded elastomer. Preferably, the elastomer may be further heated after melt blowing for adjusting the degree of welding. Manners of heating according to the disclosure include but are not limited to heat drying or infrared heating.

In one preferred embodiment of the disclosure, the method further comprises applying an adhesive on the woven fabric before the step (c). Manners of applying the adhesive include but are not limited to melt blowing on the woven base material.

In one preferred embodiment of the disclosure, the step (c) further comprises providing an outer mold, covering the elastomer with the outer mold, and heating the elastomer to form the welded elastomer for welding the fibers and at least one portion of the welded elastomer. Preferably, the inner mold corresponds to the outer mold, and both of the molds may be utilized together to form the fiber-containing structure in a desired shape. Furthermore, the outer mold can further weld the elastomer to achieve better tensile strength, tear strength and peeling strength.

Preferably, the method according to the disclosure further comprises a step of removing the inner mold and/or the outer mold.

The disclosure further provides a shoe structure comprising the fiber-containing structure as mentioned above. For example, a shoe last is used as the inner mold for manufacturing the shoe structure in an integral manner to reduce the time and various sewing steps with increased production rate and production efficiency. Furthermore, this fiber-containing structure enables the shoe structure produced thereby to have characteristics of permeability for enhancing the user's foot health.

The fiber-containing structure has improved physical properties such as tensile strength, tear strength and peeling strength and dimensional stability as well as retains fabric soft toughness and hand feeling. Furthermore, the material and the process are free of organic solvents and waste, which are environment friendly. Moreover, the method of producing is in an integral manner, which has improved production efficiency and rate.

The following examples are given for illustrating the method for manufacturing the composite fabric of the present disclosure, but are not intended to limit the scope of the present invention.

### Example 1 (not according to the invention)

Material:
Raw material of the first component of the base fiber: Lubrizol, BF-85 thermoplastic polyamine elastomer, hardness being 85 shore A, Tm being 125° C. The following is referred as (A).
Raw material of the second component of the base fiber: C03800 low melting point polyester (CoPET), Tm being 170° C. The following is referred as (B).
Elastomers: BASF, A8000 thermoplastic polyamine elastomer, hardness being 80 shore A, Tm being 140° C. The following is referred as (C).

Drying:
Each raw material (A), (B) and (C) was dried for controlling the moisture content to 300 ppm or less, and the drying temperature was 70 °C with the duration of 6 hours or more.

Extrusion:
The raw material (A) was placed into an Extruder #a, and the raw material (B) was placed into an Extruder #b.

Extruder temperature setting:
Extruder #a: from the feed inlet to the outlet, divided into three heating zones, temperatures were set 180° C, 210° C, 200° C.
Extruder #b: from the feed inlet to the outlet, divided into three heating zones, temperatures were set 190° C, 230° C, 240° C.

Spinning beam temperature setting:
Extruder #a: 220° C.
Extruder #b: 235° C.

Yield setting:
Extruder #a: rotational speed of the gear pump was 9.25 rpm.
Extruder #b: rotational speed of the gear pump was 9 rpm.
The raw materials were input into a spinneret, and spun into fiber. The fiber was cooled by passing through a cooling air area and then pass through the winder for winding at a speed of 2400 m/min. A TPU/CoPET composite fiber with a denier number of 300 den, an elongation of 65%, and a tenacity of 1.6 g/den was produced.

Interweaving:
A single circular knitting machine was applied for knitting the composite fiber into a circular woven fabric. The circular woven fabric was then sleeved onto a shoe last.

Welding:
The oven temperature was set to 150° C, and the circular woven fabric and covered shoe last was heated for 30 minutes as a woven base material.

Melt blowing:
An extrusion machine was divided into four heating zone. The temperature was set to 180° C, 200° C, 220° C, 225° C, respectively, from the input to output. The raw material (C) was loaded into the extrusion machine with the die head temperature of 250° C and air pressure of 4.5 kg/cm². The raw material (C) was melt blown on the melted woven base material.

Product:
The two-component woven base material with 0.3 mm of melted elastomer fiber layer was heated with inner and outer molds at 125° C, 2 kg/cm² for 30 sec. A shoe structure was obtained thereby.

### Example 2

Material:
Raw material of the first component of the base fiber: Lubrizol, BF-92 thermoplastic polyurethane elastomer, hardness being 92 shore A, Tm being 130° C. The following is referred as (A).
Raw material of the second component of the base fiber: T-2164A polyester, Tm being 250° C. The following is referred as (B).
Elastomers: BASF, A8230 thermoplastic polyurethane elastomer, hardness being 82 shore A, Tm being 160° C. The following is referred as (C).

Drying:
Each raw material (A), (B) and (C) was dried for controlling the moisture content to 300 ppm or less, and the drying temperature was 70 °C with the duration of 6 hours or more.

Extrusion:
The raw material (A) was placed into an Extruder #a, and the raw material (B) was placed into an Extruder #b.

Extruder temperature setting:
Extruder #a: from the feed inlet to the outlet, divided into three heating zones, temperatures were set 180° C, 210° C, 200° C.
Extruder #b: from the feed inlet to the outlet, divided into three heating zones, temperatures were set 230° C, 280° C, 285° C.

Spinning beam temperature setting:
Extruder #a: 235° C.
Extruder #b: 265° C.

Yield setting:
Extruder #a: rotational speed of the gear pump was 10.10 rpm.
Extruder #b: rotational speed of the gear pump was 12 rpm.
The raw materials were input into a spinneret, and spun into fiber. The fiber was cooled by passing through a cooling air area and then pass through the winder for winding at a speed of 2800 m/min. A TPU/PET composite fiber with a denier number of 150 den, an elongation of 45%, and a tenacity of 3.2 g/den was produced.

Interweaving:
A single circular knitting machine was applied for knitting the composite fiber into a circular woven fabric. The circular woven fabric was then sleeved onto a shoe last.

Welding:
The oven temperature was set to 150° C, and the circular woven fabric and covered shoe last was heated for 30 minutes as a woven base material.

Melt blowing:
An extrusion machine was divided into four heating zone. The temperature was set to 180° C, 200° C, 220° C, 225° C, respectively, from the input to output. The raw material (C) was loaded into the extrusion machine with the die head temperature of 255° C and air pressure of 4.5 kg/cm². The raw material (C) was melt blown on the melted woven base material.

Product:
The two-component woven base material with 0.3 mm of melted elastomer fiber layer was heated with inner and outer molds at 130° C, 2.5 kg/cm² for 36 sec. A shoe structure was obtained thereby.

While the present disclosure has been described and illustrated with reference to specific embodiments thereof, these descriptions and illustrations are not limiting. It should be understood by those skilled in the art that various changes may be made without departing from the scope of the present disclosure as defined by the appended claims. The illustrations may not be necessarily drawn to scale. There may be distinctions between the artistic renditions in the present disclosure and the actual apparatus due to manufacturing processes and tolerances. There may be other embodiments of the present disclosure which are not specifically illustrated. The specification and drawings are to be regarded as illustrative rather than restrictive. Modifications may be made to adapt a particular situation, material, composition of matter, method, or process to the objective, scope of the present disclosure. All such modifications are intended to be within the scope of the claims appended hereto. While the methods disclosed herein have been described with reference to particular operations performed in a particular order, it will be understood that these operations may be combined, sub-divided, or re-ordered to form an equivalent method without departing from the teachings of the present disclosure. Accordingly, unless specifically indicated herein, the order and grouping of the operations are not limitations of the present disclosure.

## Claims

1. A fiber-containing structure comprising:
a woven base material comprising base fibers, the base fibers being interwoven with each other and being welded to each other in at least one interlacing place, wherein a material of the base fibers comprises thermoplastic polyurethane (TPU);
a welded elastomer layer comprising a welded elastomer, wherein the base fibers and at least one part of the welded elastomer are welded to each other, wherein a material of the welded elastomer layer comprises TPU; and
an adhesive locating between the woven base material and the welded elastomer layer, wherein a material of the adhesive comprises TPU.

2. The fiber-containing structure of claim 1, wherein the base fibers are multi-component fibers, and the multi-component fibers are in a shape of core/sheath, side by side or segmented pie.

3. The fiber-containing structure of any of the preceding claims, wherein the base fibers comprise a first component and a second component, the base fibers in the first component are welded together in at least one interlacing place, and the base fibers in the second component are not welded.

4. The fiber-containing structure of any of the preceding claims, wherein the base fibers comprise an elastic fiber.

5. The fiber-containing structure of any of the preceding claims, wherein the welded elastomer layer comprises a welded mesh layer comprising mesh fibers, the mesh fibers are crossing, nonwoven and welded together in at least one crossing place, and the base fibers and at least one part of the mesh fibers are welded together.

6. The fiber-containing structure of any of the preceding claims, wherein the base fibers comprise a first component and a second component, the base fibers in the first component are welded together with at least one part of the welded elastomer, and the base fibers in the second component are not welded.

7. A method for manufacturing a fiber-containing structure, wherein the fiber-containing structure comprises:
a woven base material comprising base fibers, the base fibers being interwoven with each other and being welded to each other in at least one interlacing place; and
a welded elastomer layer comprising a welded elastomer, wherein the base fibers and at least one part of the welded elastomer are welded to each other; the method comprising:
(a) providing a woven fabric, wherein the woven fabric comprises fibers, and the fibers are interwoven with each other;
(b) heating the woven fabric for welding the fibers in at least one interlacing place to obtain the woven base material; and
(c) melt blowing an elastomer on the woven base material to form the welded elastomer, and welding the fibers and at least one portion of the welded elastomer.

8. The method of claim 7, wherein the step (b) comprises providing an inner mold, covering the inner mold with the woven fabric, and heating the woven fabric for welding the fibers in at least one interlacing place.

9. The method of claim 7 or 8, wherein the step (c) comprises providing an outer mold, covering the elastomer with the outer mold, and heating the elastomer to form the welded elastomer for welding the fibers and at least one portion of the welded elastomer.

10. A shoe structure comprising a fiber-containing structure comprising:
a woven base material comprising base fibers, the base fibers being interwoven with each other and being welded to each other in at least one interlacing place, wherein a material of the base fibers comprises thermoplastic polyurethane (TPU);
a welded elastomer layer comprising a welded elastomer, wherein the base fibers and at least one part of the welded elastomer are welded to each other, wherein a material of the welded elastomer layer comprises TPU; and
an adhesive locating between the woven base material and the welded elastomer layer, wherein a material of the adhesive comprises TPU.

## Patentansprüche

1. Eine faserhaltige Struktur, umfassend:
ein gewebtes Basismaterial, das Basisfasern umfasst, wobei die Basisfasern miteinander verwoben sind und an mindestens einer Überlappungsstelle miteinander verschweißt sind, wobei ein Material der Basisfasern thermoplastisches Polyurethan (TPU) umfasst;
eine geschweißte Elastomerschicht, die ein geschweißtes Elastomer umfasst, wobei die Basisfasern und mindestens ein Teil des geschweißten Elastomers miteinander verschweißt sind, wobei ein Material der geschweißten Elastomerschicht TPU umfasst; und
einen Klebstoff, der sich zwischen dem gewebten Grundmaterial und der geschweißten Elastomerschicht befindet, wobei ein Material des Klebstoffs TPU umfasst.

2. Die faserhaltige Struktur nach Anspruch 1, wobei die Basisfasern Mehrkomponentenfasern sind und die Mehrkomponentenfasern in Form von Kern/Mantel, nebeneinander oder in Segmenten vorliegen.

3. Die faserhaltige Struktur nach einem der vorhergehenden Ansprüche, wobei die Basisfasern eine erste Komponente und eine zweite Komponente umfassen, die Basisfasern der ersten Komponente an mindestens einer Überlappungsstelle miteinander verschweißt sind und die Basisfasern der zweiten Komponente nicht verschweißt sind.

4. Die faserhaltige Struktur nach einem der vorhergehenden Ansprüche, wobei die Basisfasern eine elastische Faser umfassen.

5. Die faserhaltige Struktur nach einem der vorhergehenden Ansprüche, wobei die geschweißte Elastomerschicht eine geschweißte Netzschicht mit Netzfasern umfasst, die Netzfasern sich kreuzen, nicht gewebt und an mindestens einer Kreuzungsstelle miteinander verschweißt sind und die Basisfasern und mindestens ein Teil der Netzfasern miteinander verschweißt sind.

6. Die faserhaltige Struktur nach einem der vorhergehenden Ansprüche, wobei die Basisfasern eine erste Komponente und eine zweite Komponente umfassen, die Basisfasern in der ersten Komponente mit mindestens einem Teil des geschweißten Elastomers verschweißt sind und die Basisfasern in der zweiten Komponente nicht verschweißt sind.

7. Ein Verfahren zur Herstellung einer faserhaltigen Struktur, wobei die faserhaltige Struktur umfasst:
ein gewebtes Basismaterial, das Basisfasern umfasst, wobei die Basisfasern miteinander verwoben sind und an mindestens einer Überlappungsstelle miteinander verschweißt sind; und
eine geschweißte Elastomerschicht, die ein geschweißtes Elastomer umfasst, wobei die Basisfasern und mindestens ein Teil des geschweißten Elastomers miteinander verschweißt sind;
wobei das Verfahren umfasst:
(a) Bereitstellen eines gewebten Stoffes, wobei der gewebte Stoff Fasern umfasst und die Fasern miteinander verwoben sind;
(b) Erhitzen des Gewebes zum Verschweißen der Fasern an mindestens einer Überlappungsstelle, um das gewebte Grundmaterial zu erhalten; und
(c) Schmelzblasen eines Elastomers auf das gewebte Grundmaterial, um das geschweißte Elastomer zu bilden, und Verschweißen der Fasern und mindestens eines Teils des geschweißten Elastomers.

8. Das Verfahren nach Anspruch 7, wobei der Schritt (b) das Bereitstellen einer inneren Form, das Bedecken der inneren Form mit dem Gewebe und das Erhitzen des Gewebes zum Verschweißen der Fasern an mindestens einer Überlappungsstelle umfasst.

9. Das Verfahren nach Anspruch 7 oder 8, wobei der Schritt (c) das Bereitstellen einer äußeren Form, das Bedecken des Elastomers mit der äußeren Form und das Erhitzen des Elastomers zur Bildung des geschweißten Elastomers zum Verschweißen der Fasern und mindestens eines Teils des geschweißten Elastomers umfasst.

10. Eine Schuhstruktur, umfassend eine faserhaltige Struktur, umfassend:
ein gewebtes Basismaterial, das Basisfasern umfasst, wobei die Basisfasern miteinander verwoben sind und an mindestens einer Überlappungsstelle miteinander verschweißt sind, wobei ein Material der Basisfasern thermoplastisches Polyurethan (TPU) umfasst;
eine geschweißte Elastomerschicht, die ein geschweißtes Elastomer umfasst, wobei die Basisfasern und mindestens ein Teil des geschweißten Elastomers miteinander verschweißt sind, wobei ein Material der geschweißten Elastomerschicht TPU umfasst; und
einen Klebstoff, der sich zwischen dem gewebten Grundmaterial und der geschweißten Elastomerschicht befindet, wobei ein Material des Klebstoffs TPU umfasst.

## Revendications

1. Une structure contenant des fibres, comprenant
un matériau de base tissé comprenant des fibres de base, les fibres de base étant tissées ensemble et soudées ensemble au niveau d'au moins un point de chevauchement, dans lequel un matériau des fibres de base comprend du polyuréthane thermoplastique (TPU) ;
une couche élastomère soudée comprenant un élastomère soudé, dans laquelle les fibres de base et au moins une partie de l'élastomère soudé sont soudées ensemble, dans laquelle un matériau de la couche élastomère soudée comprend du TPU ; et
un adhésif situé entre le matériau de base tissé et la couche élastomère soudée, dans lequel un matériau de l'adhésif comprend du TPU.

2. La structure contenant des fibres selon la revendication 1, dans laquelle les fibres de base sont des fibres multicomposantes et les fibres multicomposantes se présentent sous forme de noyau/gaine, côte à côte ou en segments.

3. La structure contenant des fibres selon l'une quelconque des revendications précédentes, dans laquelle les fibres de base comprennent un premier composant et un deuxième composant, les fibres de base du premier composant sont soudées entre elles en au moins un point de chevauchement et les fibres de base du deuxième composant ne sont pas soudées.

4. La structure contenant des fibres selon l'une quelconque des revendications précédentes, dans laquelle les fibres de base comprennent une fibre élastique.

5. La structure contenant des fibres selon l'une quelconque des revendications précédentes, dans laquelle la couche élastomère soudée comprend une couche réticulée soudée comprenant des fibres réticulées, les fibres réticulées se croisent, ne sont pas tissées et sont soudées les unes aux autres au moins à un point de croisement, et les fibres de base et au moins une partie des fibres réticulées sont soudées les unes aux autres.

6. La structure contenant des fibres selon l'une quelconque des revendications précédentes, dans laquelle les fibres de base comprennent un premier composant et un second composant, les fibres de base dans le premier composant étant soudées à au moins une partie de l'élastomère soudé, et les fibres de base dans le second composant n'étant pas soudées.

7. Un procédé pour la fabrication d'une structure contenant des fibres, dans lequel la structure contenant des fibres comprend :
un matériau de base tissé comprenant des fibres de base, les fibres de base étant tissées ensemble et soudées ensemble au niveau d'au moins un point de chevauchement ; et
une couche élastomère soudée comprenant un élastomère soudé, les fibres de base et au moins une partie de l'élastomère soudé étant soudées ensemble ; le procédé comprenant :
(a) fournir une étoffe tissée, l'étoffe tissée comprenant des fibres, les fibres étant tissées ensemble ;
(b) chauffer le tissu pour souder les fibres en au moins un point de chevauchement afin d'obtenir le matériau de base tissé ; et
(c) le soufflage à l'état fondu d'un élastomère sur le matériau de base tissé pour former l'élastomère soudé, et le soudage des fibres et d'au moins une partie de l'élastomère soudé.

8. Le procédé selon la revendication 7, dans lequel l'étape (b) comprend la fourniture d'un moule interne, le recouvrement du moule interne avec le tissu et le chauffage du tissu pour souder les fibres en au moins un point de chevauchement.

9. Le procédé selon la revendication 7 ou 8, dans lequel l'étape (c) comprend la fourniture d'un moule externe, le recouvrement de l'élastomère avec le moule externe et le chauffage de l'élastomère pour former l'élastomère soudé pour souder les fibres et au moins une partie de l'élastomère soudé.

10. Une structure de chaussure comprenant une structure contenant des fibres, comprenant :
un matériau de base tissé comprenant des fibres de base, les fibres de base étant tissées ensemble et soudées ensemble au niveau d'au moins un point de chevauchement, dans lequel un matériau des fibres de base comprend du polyuréthane thermoplastique (TPU) ;
une couche élastomère soudée comprenant un élastomère soudé, dans laquelle les fibres de base et au moins une partie de l'élastomère soudé sont soudées ensemble, dans laquelle un matériau de la couche élastomère soudée comprend du TPU ; et
un adhésif situé entre le matériau de base tissé et la couche élastomère soudée, dans lequel un matériau de l'adhésif comprend du TPU.
